# EUROPEAN PATENT APPLICATION

(11) **EP 4 711 843 A1**
(43) Date of publication of application: **18.03.2026**
(21) Application number: 25199002.4
(22) Date of filing: 29.08.2025
(51) Int. Cl.: G02F 1/21, G02F 1/225

(54) **FOLDED OPTICAL MODULATOR**

(30) Priority: 06.09.2024 US 202463691786 P
(71) Applicant: Marvell Asia Pte Ltd, Singapore 369522 (SG)
(72) Inventor: Tu, Xiaoguang, 165004 Singapore (SG); Kato, Masaki, Palo Alto, CA, 94303 (US)
(74) Representative: Grünecker Patent- und Rechtsanwälte PartG mbB

(57) **Abstract**

An optical device includes a substrate, at least first and second metal traces disposed on the substrate to define an electrical transmission line, and an optical waveguide, which is disposed on the substrate along a serpentine path passing between the metal traces, and which includes at least first and second electrooptical modulation segments, which are arranged in series along the optical waveguide between the first and second metal traces and are separated by bends in the serpentine path. The device further includes a plurality of electrode pairs, each electrode pair including first and second electrodes connected respectively to the first and second metal traces and disposed in mutual proximity on opposing sides of one of the electrooptical modulation segments, including at least first electrode pairs disposed on opposing sides of the first electrooptical modulation segment and second electrode pairs disposed on opposing sides of the second electrooptical modulation segment.

## Description

### CROSS-REFERENCE TO RELATED APPLICATION

This application claims the benefit of U.S. Provisional Patent Application 63/691,786, filed September 6, 2024, which is incorporated herein by reference.

### FIELD OF THE INVENTION

The present invention relates generally to optoelectronic devices, and particularly to optical modulators.

### BACKGROUND

In a guided-wave optical modulator which is configured as a Mach-Zehnder interferometer, a waveguide is split into two branches with suitably placed electrodes adjacent to one or both of the branches. An electrical traveling microwave signal is coupled to the electrodes to modulate, through the electro-optical effect, the relative optical phase between the guided waves propagating through the respective branches. As the two branches of the waveguide are re-joined and the optical waves from the branches interfere with each other, the modulation of the relative optical phase is converted into a modulation of the amplitude of the combined optical wave.

Guided-wave modulators, such as described hereinabove, are used in optical communication systems to transfer modulation from an electronic signal to an optical signal, which may be propagated in optical waveguides or optical fibers at high speed and with low propagation losses.

The terms "optical waves," "optical guided waves," and "guided waves," as used in the present description and in the claims, refer generally to any and all of visible, infrared, and ultraviolet radiation.

### SUMMARY

Embodiments of the present invention that are described hereinbelow provide improved designs for optical modulators.

There is therefore provided, in accordance with an embodiment of the invention, an optical modulation device including a substrate, at least first and second metal traces disposed on the substrate to define an electrical transmission line and an optical waveguide, which is disposed on the substrate along a serpentine path passing between the at least first and second metal traces. The optical waveguide includes at least first and second electrooptical modulation segments, which are arranged in series along the optical waveguide between the first and second metal traces and are separated by bends in the serpentine path. There is further provided a plurality of electrode pairs, each electrode pair including first and second electrodes connected respectively to the first and second metal traces and disposed in mutual proximity on opposing sides of one of the electrooptical modulation segments. At least first electrode pairs are disposed on opposing sides of the first electrooptical modulation segment, and second electrode pairs are disposed on opposing sides of the second electrooptical modulation segment.

In a disclosed embodiment, the first and second electrooptical modulation segments are mutually parallel.

In a further embodiment, the first and second electrooptical modulation segments are separated by at least two bends in the serpentine path. In a disclosed embodiment, an optical wave injected into the optical waveguide propagates through both the first and second electrooptical modulation segments in the same direction relative to the electrical transmission line.

In another embodiment, the first and second electrode pairs are interleaved along the electrical transmission line. Additionally or alternatively, the interleaved electrode pairs include at least four electrode pairs.

In a disclosed embodiment, the at least first and second electrooptical modulation segments include at least three electrooptical modulation segments between the first and second metal traces.

In a further embodiment, the at least first and second electrooptical modulation segments include silicon waveguides.

In another embodiment, the bends in the serpentine path include silicon nitride waveguides.

There is also provided, in accordance with an embodiment of the invention, an apparatus for optical modulation, including an optical modulation device, as described hereinabove, and a reference waveguide. An optical splitter is coupled to split an input optical signal between the optical waveguide in the device and the reference waveguide, and an optical combiner is coupled to combine respective output optical signals from the optical waveguide in the device and the reference waveguide. An electrical drive circuit is coupled to apply a modulation signal to the electrical transmission line for modulating the input optical signal in the device.

There is additionally provided, in accordance with an embodiment of the invention, a method for modulating an optical signal, which includes disposing an optical waveguide along a serpentine path on a substrate between first and second metal traces, which define an electrical transmission line. The optical waveguide includes at least first and second electrooptical modulation segments, which are arranged in series along the optical waveguide between the first and second metal traces and are separated by bends in the serpentine path. A plurality of electrode pairs are in proximity to the optical waveguide, each electrode pair including first and second electrodes connected respectively to the first and second metal traces and disposed in mutual proximity on opposing sides of one of the electrooptical modulation segments. At least first electrode pairs are disposed on opposing sides of the first electrooptical modulation segment, and second electrode pairs are disposed on opposing sides of the second electrooptical modulation segment. A modulation signal is applied to the electrical transmission line to modulate an optical signal propagating through the optical waveguide.

The present invention will be more fully understood from the following detailed description of the embodiments thereof, taken together with the drawings in which:

### BRIEF DESCRIPTION OF THE DRAWINGS

Fig. 1 is a schematic top view of an optical device including a folded optical modulator, in accordance with an embodiment of the invention;
Fig. 2 is a schematic detail view of the folded optical modulator of Fig. 1, in accordance with an embodiment of the invention; and
Fig. 3 is a schematic detail view of a folded optical modulator, in accordance with another embodiment of the invention.

### DETAILED DESCRIPTION OF EMBODIMENTS

### OVERVIEW

Silicon-based guided-wave electro-optical modulators are capable of modulation bandwidths up to 60 GHz. The modulation bandwidth is limited by losses of the traveling microwave signal in the electrical transmission line that drives the modulator, which increase with frequency. There is a need for design modifications that will increase the modulation bandwidth while maintaining high modulation efficiency and without increasing the optical insertion loss of the modulator.

The embodiments of the present invention that are described herein achieve increased modulation bandwidth by folding the modulator into two or more modulation segments in a serpentine path. These segments are coupled together in series and may be connected to each other by a passive optical waveguide. Such a folding allows a reduction of the length of the electrical transmission line driving the modulator relative to the length of the optical waveguide to which the modulation is applied, which may be at least twice as long as the driving transmission line. This arrangement thus reduces the losses of the traveling microwave signals while permitting higher modulation frequencies. It increases the modulation bandwidth of the electrooptical modulator without significantly increasing the optical losses or reducing modulation efficiency.

Thus, in the disclosed embodiments, an optical modulation device comprises a substrate with at least two metal traces disposed on the substrate to define an electrical transmission line. An optical waveguide is disposed on the substrate along a serpentine path passing between the metal traces. The optical waveguide comprises at least two electrooptical modulation segments (and possibly three or more), which are arranged in series along the optical waveguide between the metal traces and are separated by bends in the serpentine path.

The term "serpentine" is used in the present description and in the claims in its conventional sense, to refer to a path that bends back and forth, with turns that bend alternately right and left along the direction of propagation of on optical wave in the waveguide. In the disclosed embodiments, the electrooptical modulation segments are generally straight and mutually parallel and are separated by at least two bends in the serpentine path, so that an optical wave injected into the optical waveguide propagates through the different electrooptical modulation segments in the same direction relative to the electrical transmission line. Alternatively, other arrangements and interconnections of the electrooptical modulation segments between the metal traces may be used.

To transfer the modulation from the electrical drive signal in the transmission line to the optical wave traveling through the waveguide, the device comprises multiple electrode pairs in mutual proximity on opposing sides of each of the electrooptical modulation segments. In each electrode pair one of the electrodes is connected to one of metal traces of the transmission line, for example the signal line, and the other electrode is connected to the other metal trace, for example the ground line. The electrode pairs may advantageously be interleaved along the electrical transmission line, with each electrode pair driving a different electrooptical modulation segment from its immediate neighbors. Alternatively, other arrangements of the electrodes may be used.

In the embodiments that are described below, electrooptical modulators of this sort are integrated into a Mach-Zehnder-type modulation device. Alternatively, the sorts of modulation schemes that are described here may be integrated, mutatis mutandis, into other types of optical modulation devices. All such alternative embodiments and implementations are considered to be within the scope of the present disclosure.

### SYSTEM DESCRIPTION

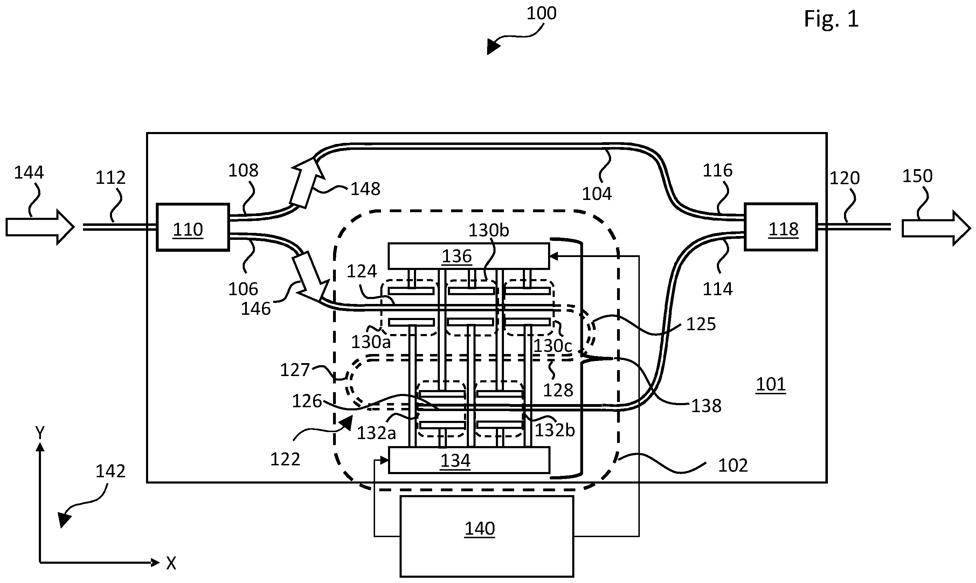

Fig. 1 is a schematic top view of an optical device 100, in accordance with an embodiment of the invention. The same labels are used in this and subsequent figures for similar or identical items.

Optical device 100 comprises a substrate 101, such as a silicon-on-oxide (SOI) substrate. A folded optical modulator 102 and a reference waveguide 104 are formed on substrate 101, for example by processes of thin-film deposition and optical lithography that are known in the art. Folded optical modulator 102 comprises an optical waveguide 122, which is made up of multiple segments, as described below. Optical waveguide 122 and reference waveguide 104 are optically coupled to an input waveguide 112 at their respective input ends 106 and 108 by an optical splitter 110. They are further optically coupled at their respective output ends 114 and 116 by an optical combiner 118 to an output waveguide 120.

Optical waveguide 122 is formed on substrate 101 along a serpentine path. Optical waveguide 122 comprises two mutually parallel electrooptical modulation segments 124 and 126, which are separated by bends 125 and 127. In the pictured example, bends 125 and 127 are connected by a passive segment 128 of waveguide 122 (denoted by a dotted double line). For example, electrooptical modulation segments 124 and 126 may comprise silicon, while bends 125 and 127 together with passive segment 128 comprise a material with lower optical loss, such as silicon nitride. In order to match the optical phases in modulation segments 124 and 126 from electrode pair 130c to electrode pair 132a, the total optical length of bends 125 and 127 together with passive segment 128 is preferably an integer multiple of wavelength λ at which optical device 100 operates; the total optical length is given by the product n×L, wherein n is the effective index of refraction of the waveguide forming bends 125 and 127 and passive segment 128, and L is the total physical length of these parts.

A metal layer is deposited and etched on substrate 101 to define an electrical transmission line 138, comprising a signal trace 134 and a ground trace 136. Transmission line 138 in optical device 100 may be either a differential transmission line, wherein both traces 134 and 136 are signal lines driven differentially by a modulation signal, or a single-ended transmission line, wherein one of the traces is a signal trace and the other is grounded. Transmission line 138 may include one or more additional traces (not shown in the figures), such as an additional ground trace parallel to signal trace 134 on the opposite side from ground trace 136 (in what is known as a ground-signal-ground configuration).

The serpentine path of optical waveguide 122 is contained between traces 134 and 136. Three electrode pairs 130a, 130b and 130c are formed on opposing sides of electrooptical modulation segment 124, while two electrode pairs 132a and 132b are formed on opposing sides of electrooptical modulation segment 126. One of the electrodes of each of electrode pairs 130a-c and 132a-b is connected to signal trace 134, while the other electrode of each electrode pair is connected to ground trace 136. The electrode pairs 130a-c and 132a-b are interleaved along electrical transmission line 138. As silicon nitride does not experience any electrooptical effect due to possible stray electrical fields from electrodes 130a-c and 132a-b, the locations relative to the electrodes of bends 125 and 127 and passive segment 128, both laterally and in depth, are not critical for the operation of device 100.

An electrical drive circuit 140 applies a modulation signal between signal and ground traces 134 and 136 of electrical transmission line 138. The modulation signal typically gives rise to a traveling signal at microwave frequencies in transmission line 138. This traveling signal creates a rapid voltage variation across electrode pairs 130a-c and 132a-b, which gives rise to a corresponding phase modulation of the optical signal propagating through optical waveguide 122.

Cartesian coordinates 142 are used for denoting the orientation of features in subsequent figures relative to Fig. 1.

In some embodiments, as noted above, electrooptical modulation segments 124 and 126 comprise silicon (Si) waveguides, while passive segment 128 comprises a silicon nitride (SiN) waveguide, which has low losses and is not sensitive to stray electric fields. In order to utilize the indirect electrooptic effect of Si in modulation segments 124 and 126, their material may be suitably doped to tune the free-carrier concentration for modulating the refractive index and absorption coefficient of Si. In alternative embodiments, other suitable materials may be used for both modulation segments 124 and 126 and for passive segment 128. Signal and ground traces 134 and 136, as well as electrode pairs 130a-c and 132a-b, comprise metal films formed on substrate 101.

Optical device 100 functions as a Mach-Zehnder interferometer. Thus, an unmodulated optical guided wave 144 enters device 100 through input waveguide 112 and is split by optical splitter 110 into a signal wave 146 propagating in optical waveguide 122 and a reference wave 148 propagating in reference waveguide 104. Signal wave 146 propagates in modulation segments 124 and 126 in the same direction relative to electrical transmission line 138.

Electrical drive circuit 140 applies a modulation signal to electrical transmission line 138. As signal wave 146 travels in modulation segments 124 and 126 between respective electrode pairs 130a-c and 132a-b, it accumulates an optical phase change due to the modulation signal and the electrooptic effect. The length of waveguide 104 may be selected to have either the same optical path length as modulator 102 or a different optical path length.

When signal wave 146 and reference wave 148 are again combined by optical combiner 118 into an output optical wave 150 in output waveguide 120, the accumulated phase change in signal wave 146 modulates the amplitude of the output optical wave due to optical interference between the signal wave and the reference wave. Thus the electrical modulation signal applied by electrical drive 140 is converted into amplitude modulation of output optical wave 150, which then propagates in output waveguide 120.

In the disclosed embodiment, the combined length of modulation segments 124 and 126 is approximately double the length of electrical transmission line 138. Thus, with a relatively short electrical transmission line 138, having concomitantly low losses of the traveling microwave signal even at high frequencies, a cumulative phase shift may be introduced to signal wave 146 with a high modulation efficiency. In optical device 100, microwave signals at frequencies of the order of 100 GHz may be used.

### FOLDED MODULATOR DESIGNS

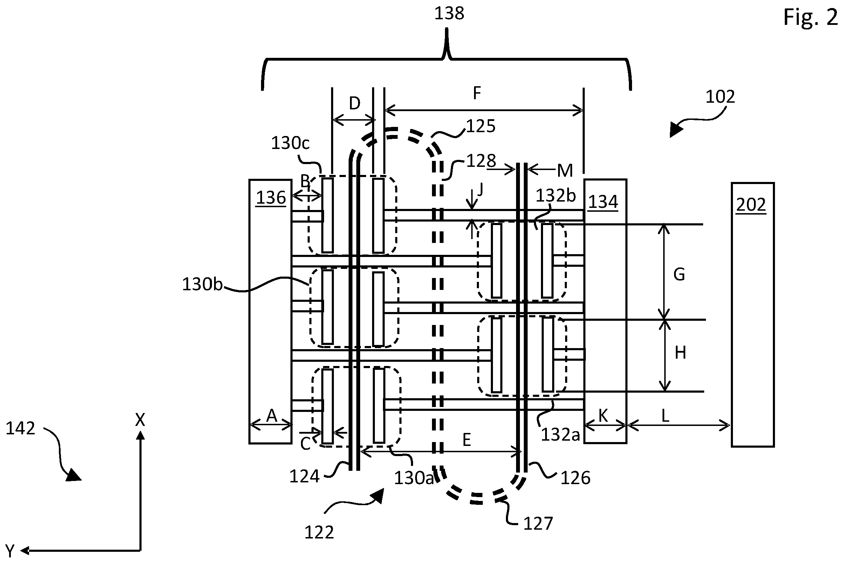

Fig. 2 is a schematic detail view of folded optical modulator 102 (Fig. 1), in accordance with an embodiment of the invention. Fig. 2 shows folded optical modulator 102 rotated by 90° in a counter-clockwise direction relative to Fig. 1 and includes marking of dimensions of items marked in the figure. Fig. 2 also shows an additional ground trace 202, which was omitted from Fig. 1 for the sake of simplicity.

Typical dimensions of folded optical modulator 102 are given in Table 1, hereinbelow. These values are given by way of example, rather than limitation, and may be increased or decreased for optimal performance in accordance with constraints such as optical wavelength and modulation frequency. Furthermore, although in the pictured example, modulator 102 includes five interleaved pairs of electrodes, in alternative embodiments folded optical modulators may comprise larger or smaller numbers of electrode pairs.

**Table 1: Typical values of dimensions of folded optical modulator 102.**

| **Item** | **Dimension label in** **Fig. 2** | **Typical value (µm)** |
|---|---|---|
| Width of ground trace 136 | A | 80 |
| Spacing 1 | B | 20 |
| Electrode width (electrode pairs 130a-c and 132a-b) | C | 5 |
| Electrode-to-electrode gap (electrode pairs 130a-c and 132a-b) | D | 10 |
| Gap between modulation segments 124 and 126 | E | 30 |
| Spacing 2 | F | 70 |
| Electrode-to-electrode pitch (electrode pairs 130a-c and 132a-b) | G | 100 |
| Electrode length (electrode pairs 130a-c and 132a-b) | H | 90 |
| Width of traces between electrode pairs 130a-c, 132a-b and traces 134, 136 | J | 5 |
| Width of signal trace 134 | K | 10 |
| Gap between signal trace 134 and additional ground trace 202 | L | 30 |
| Width of waveguide 122 | M | 0.5 |

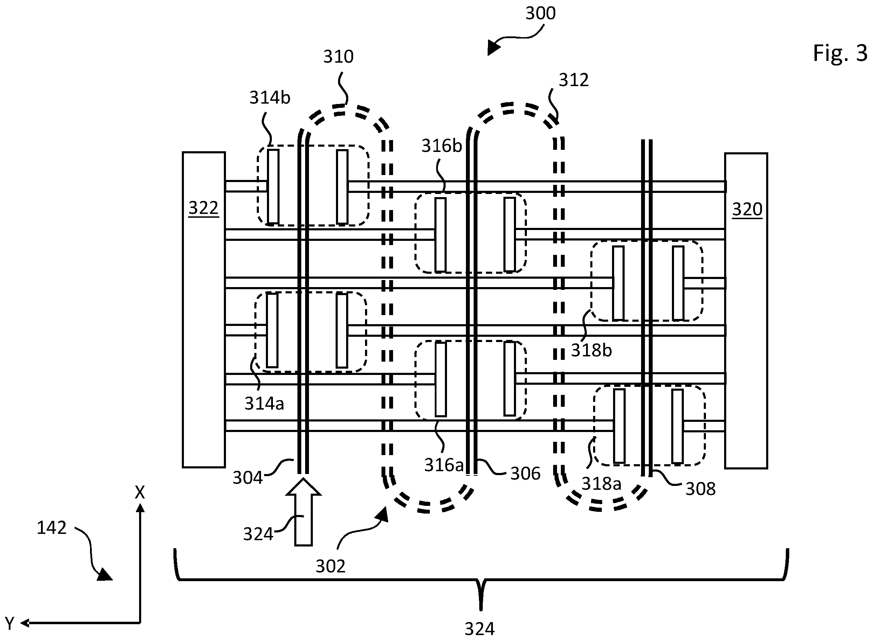

Fig. 3 is a schematic top view of a folded optical modulator 300, in accordance with another embodiment of the invention.

Folded optical modulator 300 is similar to folded optical modulator 102 (Figs. 1 and 2), with the difference that it comprises three modulation segments instead of two. Optical modulator 300 may function as one arm of a Mach-Zehnder interferometer, similarly to optical modulator 102 in optical device 100.

Optical modulator 300 comprises an optical waveguide 302, which is disposed on a substrate (not shown) along a serpentine path. Optical waveguide 302 comprises three mutually parallel electrooptical modulation segments 304, 306 and 308, which are separated by passive segments 310 and 312 (denoted by dotted double lines), including suitable bends. Electrooptical modulation segment 304 passes in proximity between two electrode pairs 314a and 314b; electrooptical modulation segment 306 passes in proximity between two electrode pairs 316a and 316b; and electrooptical modulation segment 308 passes in proximity between two electrode pairs 318a and 318b. One of the electrodes of each of electrode pairs 314a-b, 316a-b and 318a-b is connected to a signal trace 320, while the other electrode of each electrode pair is connected to a ground trace 322, wherein the signal and ground traces form an electrical transmission line 324. Electrode pairs 314a-b, 316a-b and 318a-b are interleaved along electrical transmission line 324.

The materials of modulation segments 304, 306 and 308, of bends 310 and 312, of electrode pairs 314a-b, 316a-b and 318a-b, and of signal and ground traces 320 and 322, respectively, may be the same as or similar to respective items in optical modulator 102.

Folded optical modulator 300 is driven, similarly to modulator 102, by a microwave traveling signal coupled to signal and ground traces 320 and 322, which introduces a modulated phase shift to a signal wave 324 propagating in waveguide 302. Similarly to folded optical modulator 102, signal wave 324 propagates in modulation segments 304, 306 and 308 in the same direction relative to electrical transmission line 324.

Having three modulation segments 304, 306 and 308 for a given length of signal and ground traces 320 and 322 further increases the efficiency of the modulation of the optical wave over the two modulation segments of optical modulator 102.

The waveguides in folded optical modulator 300 may be "mirrored" about the X-axis so that signal wave 324 enters at the right side rather than the left as in Fig. 3.

In alternative embodiments, the number of modulation segments may be increased to four or more, thus further increasing the modulation efficiency. Similarly, the modulator may include larger numbers of electrode pairs.

It will be appreciated that the embodiments described above are cited by way of example, and that the present invention is not limited to what has been particularly shown and described hereinabove. Rather, the scope of the present invention includes both combinations and subcombinations of the various features described hereinabove, as well as variations and modifications thereof which would occur to persons skilled in the art upon reading the foregoing description and which are not disclosed in the prior art.
**The** following is a list of further preferred embodiments of the invention:
Embodiment 1. An optical modulation device, comprising:
   a substrate;
   at least first and second metal traces disposed on the substrate to define a electrical transmission line;
   an optical waveguide, which is disposed on the substrate along a serpentine path passing between the first and second metal traces, and which comprises at least first and second electrooptical modulation segments, which are arranged in series along the optical waveguide between the first and second metal traces and are separated by bends in the serpentine path; and
   a plurality of electrode pairs, each electrode pair comprising first and second electrodes connected respectively to the first and second metal traces and disposed in mutual proximity on opposing sides of one of the electrooptical modulation segments, including at least first electrode pairs disposed on opposing sides of the first electrooptical modulation segment and second electrode pairs disposed on opposing sides of the second electrooptical modulation segment.
Embodiment 2. The device according to embodiment 1, wherein the first and second electrooptical modulation segments are mutually parallel.
Embodiment 3. The device according to embodiment 2, wherein the first and second electrooptical modulation segments are separated by at least two bends in the serpentine path.
Embodiment 4. The device according to embodiment 1, wherein the optical waveguide is configured such that an optical wave injected into the optical waveguide propagates through both the first and second electrooptical modulation segments in the same direction relative to the electrical transmission line.
Embodiment 5. The device according to embodiment 1, wherein the first and second electrode pairs are interleaved along the electrical transmission line.
Embodiment 6. The device according to embodiment 5, wherein the interleaved electrode pairs comprise at least four electrode pairs.
Embodiment 7. The device according to embodiment 1, wherein the at least first and second electrooptical modulation segments comprise at least three electrooptical modulation segments between the first and second metal traces.
Embodiment 8. The device according to embodiment 1, wherein the at least first and second electrooptical modulation segments comprise silicon waveguides.
Embodiment 9. The device according to embodiment 8, wherein the bends in the serpentine path comprise silicon nitride waveguides.
Embodiment 10. Apparatus for optical modulation, comprising:
   an optical modulation device, comprising:
      a substrate;
      at least first and second metal traces disposed on the substrate to define a electrical transmission line;
      an optical waveguide, which is disposed on the substrate along a serpentine path passing between the first and second metal traces, and which comprises at least first and second electrooptical modulation segments, which are arranged in series along the optical waveguide between the first and second metal traces and are separated by bends in the serpentine path; and
      a plurality of electrode pairs, each electrode pair comprising first and second electrodes connected respectively to the first and second metal traces and disposed in mutual proximity on opposing sides of one of the electrooptical modulation segments, including at least first electrode pairs disposed on opposing sides of the first electrooptical modulation segment and second electrode pairs disposed on opposing sides of the second electrooptical modulation segment;
   a reference waveguide;
   an optical splitter coupled to split an input optical signal between the optical waveguide in the device and the reference waveguide;
   an optical combiner coupled to combine respective output optical signals from the optical waveguide in the device and the reference waveguide; and
   an electrical drive circuit, which is coupled to apply a modulation signal to the electrical transmission line for modulating the input optical signal in the device.
Embodiment 11. A method for modulating an optical signal, comprising:
   disposing an optical waveguide along a serpentine path on a substrate between first and second metal traces, which define a electrical transmission line, the optical waveguide comprising at least first and second electrooptical modulation segments, which are arranged in series along the optical waveguide between the first and second metal traces and are separated by bends in the serpentine path;
   placing a plurality of electrode pairs in proximity to the optical waveguide, each electrode pair comprising first and second electrodes connected respectively to the first and second metal traces and disposed in mutual proximity on opposing sides of one of the electrooptical modulation segments, including at least first electrode pairs disposed on opposing sides of the first electrooptical modulation segment and second electrode pairs disposed on opposing sides of the second electrooptical modulation segment; and
   applying a modulation signal to the electrical transmission line to modulate an optical signal propagating through the optical waveguide.
Embodiment 12. The method according to embodiment 11, wherein disposing the optical waveguide comprises orienting the first and second electrooptical modulation segments to be mutually parallel.
Embodiment 13. The method according to embodiment 12, wherein disposing the optical waveguide comprises separating the first and second electrooptical modulation segments by at least two bends in the serpentine path.
Embodiment 14. The method according to embodiment 11, wherein disposing the optical waveguide comprises configuring the serpentine path such that an optical wave injected into the optical waveguide propagates through both the first and second electrooptical modulation segments in the same direction relative to the electrical transmission line.
Embodiment 15. The method according to embodiment 11, wherein placing the plurality of electrode pairs comprises interleaving the first and second electrode pairs along the electrical transmission line.
Embodiment 16. The method according to embodiment 15, wherein the interleaved electrode pairs comprise at least four electrode pairs.
Embodiment 17. The method according to embodiment 11, wherein disposing the optical waveguide comprises providing at least three electrooptical modulation segments between the first and second metal traces.
Embodiment 18. The method according to embodiment 11, wherein the at least first and second electrooptical modulation segments comprise silicon waveguides.
Embodiment 19. The method according to embodiment 18, wherein the bends in the serpentine path comprise silicon nitride waveguides.
Embodiment 20. The method according to embodiment 11, and comprising splitting an input optical signal between the optical waveguide and a reference waveguide and combining respective output optical signals from the optical waveguide and the reference waveguide to generate an amplitude-modulated optical signal.

## Claims

1. An optical modulation device, comprising:
a substrate;
at least first and second metal traces disposed on the substrate to define a electrical transmission line;
an optical waveguide, which is disposed on the substrate along a serpentine path passing between the first and second metal traces, and which comprises at least first and second electrooptical modulation segments, which are arranged in series along the optical waveguide between the first and second metal traces and are separated by bends in the serpentine path; and
a plurality of electrode pairs, each electrode pair comprising first and second electrodes connected respectively to the first and second metal traces and disposed in mutual proximity on opposing sides of one of the electrooptical modulation segments, including at least first electrode pairs disposed on opposing sides of the first electrooptical modulation segment and second electrode pairs disposed on opposing sides of the second electrooptical modulation segment.

2. The device according to claim 1, wherein the first and second electrooptical modulation segments are mutually parallel.

3. The device according to claim 2, wherein the first and second electrooptical modulation segments are separated by at least two bends in the serpentine path.

4. The device according to one of claims 1-3, wherein the optical waveguide is configured such that an optical wave injected into the optical waveguide propagates through both the first and second electrooptical modulation segments in the same direction relative to the electrical transmission line.

5. The device according to one of claims 1-4, wherein the first and second electrode pairs are interleaved along the electrical transmission line, and/or
wherein the interleaved electrode pairs comprise at least four electrode pairs.

6. The device according to one of claims 1-5, wherein the at least first and second electrooptical modulation segments comprise at least three electrooptical modulation segments between the first and second metal traces.

7. The device according to one of claims 1-6, wherein the at least first and second electrooptical modulation segments comprise silicon waveguides.

8. The device according to claim 7, wherein the bends in the serpentine path comprise silicon nitride waveguides.

9. Apparatus for optical modulation, comprising:
an optical modulation device, comprising:
a substrate;
at least first and second metal traces disposed on the substrate to define a electrical transmission line;
an optical waveguide, which is disposed on the substrate along a serpentine path passing between the first and second metal traces, and which comprises at least first and second electrooptical modulation segments, which are arranged in series along the optical waveguide between the first and second metal traces and are separated by bends in the serpentine path; and
a plurality of electrode pairs, each electrode pair comprising first and second electrodes connected respectively to the first and second metal traces and disposed in mutual proximity on opposing sides of one of the electrooptical modulation segments, including at least first electrode pairs disposed on opposing sides of the first electrooptical modulation segment and second electrode pairs disposed on opposing sides of the second electrooptical modulation segment;
a reference waveguide;
an optical splitter coupled to split an input optical signal between the optical waveguide in the device and the reference waveguide;
an optical combiner coupled to combine respective output optical signals from the optical waveguide in the device and the reference waveguide; and
an electrical drive circuit, which is coupled to apply a modulation signal to the electrical transmission line for modulating the input optical signal in the device.

10. A method for modulating an optical signal, comprising:
disposing an optical waveguide along a serpentine path on a substrate between first and second metal traces, which define a electrical transmission line, the optical waveguide comprising at least first and second electrooptical modulation segments, which are arranged in series along the optical waveguide between the first and second metal traces and are separated by bends in the serpentine path;
placing a plurality of electrode pairs in proximity to the optical waveguide, each electrode pair comprising first and second electrodes connected respectively to the first and second metal traces and disposed in mutual proximity on opposing sides of one of the electrooptical modulation segments, including at least first electrode pairs disposed on opposing sides of the first electrooptical modulation segment and second electrode pairs disposed on opposing sides of the second electrooptical modulation segment; and
applying a modulation signal to the electrical transmission line to modulate an optical signal propagating through the optical waveguide.

11. The method according to claim 10, wherein disposing the optical waveguide comprises orienting the first and second electrooptical modulation segments to be mutually parallel, or
wherein disposing the optical waveguide comprises separating the first and second electrooptical modulation segments by at least two bends in the serpentine path.

12. The method according to one of claims 10 or 11, wherein disposing the optical waveguide comprises configuring the serpentine path such that an optical wave injected into the optical waveguide propagates through both the first and second electrooptical modulation segments in the same direction relative to the electrical transmission line.

13. The method according to one of claims 10-12, wherein placing the plurality of electrode pairs comprises interleaving the first and second electrode pairs along the electrical transmission line, and/or
wherein the interleaved electrode pairs comprise at least four electrode pairs.

14. The method according to one of claims 10-13, wherein disposing the optical waveguide comprises providing at least three electrooptical modulation segments between the first and second metal traces, or
wherein the at least first and second electrooptical modulation segments comprise silicon waveguides, and/or
wherein the bends in the serpentine path comprise silicon nitride waveguides.

15. The method according to one of claims 10-14, and comprising splitting an input optical signal between the optical waveguide and a reference waveguide and combining respective output optical signals from the optical waveguide and the reference waveguide to generate an amplitude-modulated optical signal.
